Europäisches Patentamt

European Patent Office

Office européen des brevets

(19)

(11) Veröffentlichungsnummer: **0 467 892 B1**

## (12) EUROPÄISCHE PATENTSCHRIFT

(45) Veröffentlichungstag der Patentschrift: **10.11.93**

(21) Anmeldenummer: **90903819.2**

(22) Anmeldetag: **12.03.90**

(86) Internationale Anmeldenummer:
**PCT/EP90/00395**

(87) Internationale Veröffentlichungsnummer:
**WO 90/11859 (18.10.90 90/24)**

(51) Int. Cl.5: **B23B 5/36**, B23C 3/16,
B24B 13/06

(54) **VERFAHREN ZUR FORMGEBENDEN BEARBEITUNG VON WERKSTÜCKEN.**

(30) Priorität: **12.04.89 DE 3911986**

(43) Veröffentlichungstag der Anmeldung:
**29.01.92 Patentblatt 92/05**

(45) Bekanntmachung des Hinweises auf die
Patenterteilung:
**10.11.93 Patentblatt 93/45**

(84) Benannte Vertragsstaaten:
**AT CH DE ES FR GB IT LI NL SE**

(56) Entgegenhaltungen:
| | |
|---|---|
| EP-A- 281 754 | CH-A- 612 369 |
| DE-A- 2 614 779 | DE-C- 867 636 |
| DE-C- 2 527 643 | GB-A- 2 058 619 |
| GB-A- 2 063 117 | US-A- 3 969 615 |
| US-A- 4 558 977 | US-A- 4 572 998 |

(73) Patentinhaber: **Carl Benzinger GmbH & Co.
Präzisionsmaschinenbau
Bahnhofstrasse 7
D-75399 Unterreichenbach(DE)**

(72) Erfinder: **DORSCH, Joachim
Im Steinriegel 10
D-7267 Unterreichenbach(DE)**

(74) Vertreter: **Wolf, Eckhard, Dr.-Ing.
Patentanwälte Wolf & Lutz
Hauptmannsreute 93
D-70193 Stuttgart (DE)**

EP 0 467 892 B1

**Beschreibung**

Die Erfindung betrifft ein Verfahren und zur formgebenden Drehbearbeitung von Werkstücken nach dem Oberbegriff der unabhängigen Ansprüche 1, 2 und 3. Ein solches Verfahren ist aus EP-A-249 046 bekannt.

Beim CNC-gestützten Kopierverfahren ist es bereits bekannt, daß ein Werkzeug mit langgestreckter oder konvex gekrümmter Schneide durch eine Bewegung in zwei Achsen so über die Oberfläche eines sich gegebenenfalls drehenden Werkstückes geführt wird, daß eine gewünschte Kontur abgefahren wird. Der Schnittpunkt des Werkzeugs wandert bei der Schneidbewegung über das Werkzeug, so daß die Genauigkeit der zu bearbeitenden Werkstückoberfläche im wesentlichen von der Genauigkeit der Schneidengeometrie abhängt. Diese läßt jedoch nicht zuletzt wegen der an der Schneide allmählich auftretenden Verschleißerscheinungen zu wünschen übrig. Hinzu kommt, daß mit dem konvexen Werkzeug sowohl konvexe als auch konkave Werkstückoberflächen bearbeitet werden, was vor allem bei konvexen Werkstücken zu Ungenauigkeiten in der Oberflächenbearbeitung als Folge einer schlecht angepaßten Oberflächenkrümmung zwischen Werkstück und Werkzeug führt.

Der Erfindung liegt die Aufgabe zugrunde, ein Verfahren und eine Vorrichtung der eingangs angegebenen Art zu entwickeln, womit beliebige Krümmungen und Krümmungsvariationen in der Werkstückoberfläche mit hoher Formgenauigkeit und Oberflächengüte erzeugt werden können.

Diese Aufgabe wird gemäß der Erfindung durch die Merkmale der unabhängigen Ansprüche 1, 2 und 3 gelöst. Mit dem erfindungsgemäßen Verfahren wird also eine Art Schälvorgang ausgeführt, bei welchem die Wirkzone des Werkzeugs die Kontur der zu bearbeitenden Werkstückoberfläche punktweise unter der Bedingung zusammenfallender Tangenten von Wirkzone und Werkstückoberfläche in den momentanen Bearbeitungspositionen abfährt.

Die Krümmung der Wirkzone des Werkzeugs der Krümmung der herzustellenden Werkstückoberfläche wird insofern angenähert, als für konvexe Werkstückoberflächen eine konkave Wirkzonenkrümmung und für konkave Werkstückoberflächen eine konvexe Wirkzonenkrümmung ausgewählt wird. Diese Auswahl wird zweckmäßig so getroffen, daß im Falle der konvexen Werkstückkrümmung die Wirkzone des Werkzeugs mit gegenüber dem größten Krümmungsradius der Werkstückoberfläche größerem Krümmungsradius konkav gekrümmt ist, während im Falle einer konkav gekrümmten Werkstückoberfläche die Wirkzone in ihrer Längsrichtung mit gegenüber dem kleinsten Krümmungsradius der Werkstückoberfläche kleinerem Krümmungsradius konvex gekrümmt ist.

Die raumfest ausgerichtete Wirkzone des Werkzeugs enthält in ihrem Verlauf alle in der zu bearbeitenden Werkstückoberfläche vorkommenden Neigungen, so daß die Tangentenbedingung in allen Bearbeitungspositionen durch rein translatorische Zustellbewegungen zwischen Werkzeug und Werkstück erfüllt werden kann. Das Werkzeug und das Werkstück werden durch rein translatorische Zustellbewegungen relativ zueinander so geführt, daß zu jeder Bearbeitungsposition ein zugehöriger Wirkpunkt entlang der Wirkzone nach Maßgabe der Tangentenbedingung ausgewählt wird. Diese Verfahrensweise ist vor allem für die Oberflächenbearbeitung kleiner Werkstücke, wie z.B. Kontaktlinsen, geeignet. Die Bearbeitungsgenauigkeit und erzielbare Oberflächengüte hängt dabei maßgeblich von der geometrischen Formgenauigkeit des Werkzeugs im Bereich der Wirkzone ab.

Besonders hohe Anforderungen an Oberflächengüte und Formgenauigkeit können gemäß der Ausgestaltung der Erfindung nach dem Anspruch 2 dadurch erfüllt werden, daß das Werkzeug und das Werkstück durch translatorische und rotatorische Zustellbewegungen nach Maßgabe der Tangentenbedingung relativ zueinander geführt werden, wobei in allen Bearbeitungspositionen immer der gleiche Punkt entlang der Wirkzone als Wirkpunkt ausgewählt wird. Mit dieser Maßnahme wird der Einfluß der geometrischen Genauigkeit der Werkzeug-Wirkzone auf die erzielbare Formgenauigkeit und Oberflächengüte eliminiert. Um höhere Standzeiten des Werkzeugs zu erzielen, können bei verschiedenen Bearbeitungsvorgängen abwechselnd verschiedene Punkte entlang der Wirkzone des Werkzeugs als Wirkpunkt ausgewählt werden, so daß der bei der Bearbeitung auftretende Verschleiß am Werkzeug über die gesamte Wirkzone verteilt wird.

Für Sonderaufgaben kann es auch von Vorteil sein, wenn das Werkzeug und das Werkstück durch translatorische und rotatorische Zustellbewegungen nach Maßgabe der Tangentenbedingung relativ zueinander geführt werden, wobei zu verschiedenen Bearbeitungspositionen zumindest teilweise unterschiedliche Punkte entlang der Wirkzone als Wirkpunkte ausgewählt werden.

Um hohe Arbeitsgeschwindigkeiten zu erzielen, werden das Werkstück oder das Werkzeug einer schnelldrehenden Abtragbewegung um eine Werkstück- oder Werkzeugachse ausgesetzt.

Im folgenden wird die Erfindung anhand einiger in der Zeichnung in schematischer Weise dargestellter Ausführungsbeispiele näher erläutert. Es zeigen

Fig. 1a bis c     das Schälbearbeitungsprinzip angewandt auf drei Bearbeitungsbeispiele unter Verwendung von Werkzeugen für die rein translatorische Zustellbewegung;

Fig. 2          das Schälbearbeitungsprinzip für die drei Bearbeitungsbeispiele nach Fig. 1 unter Verwendung von Werkzeugen für die kombinierte translatorische und rotatorische Zustellbewegung;

Fig. 3a bis c      das Schälbearbeitungsprinzip entsprechend Fig. 2 im Falle dreier Beispiele mit konkaver Werkstückoberfläche;

Fig. 4          ein Schema einer für die Schälbearbeitung abgewandelten CNC-gesteuerten Drehmaschine.

Fig. 5 bis 8       vier verschiedene Bearbeitungsbeispiele in schematischer Darstellung, die mit der Drehmaschine nach Fig. 4 ausführbar sind.

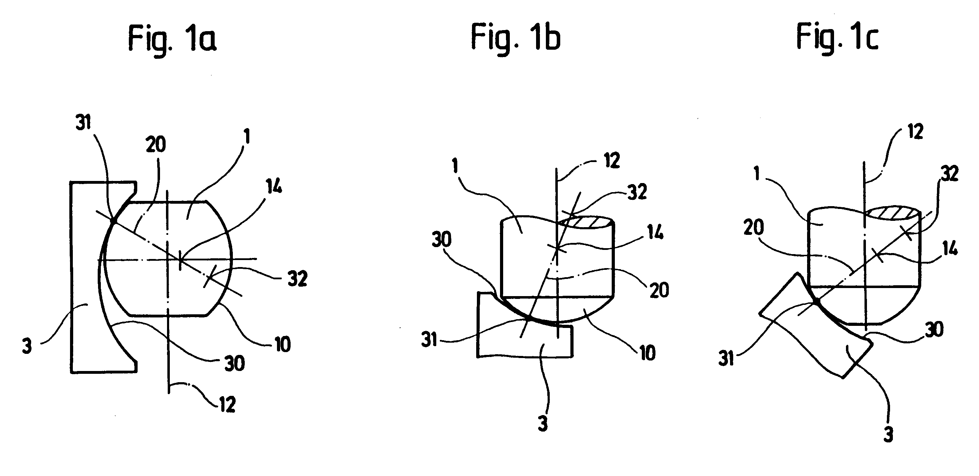

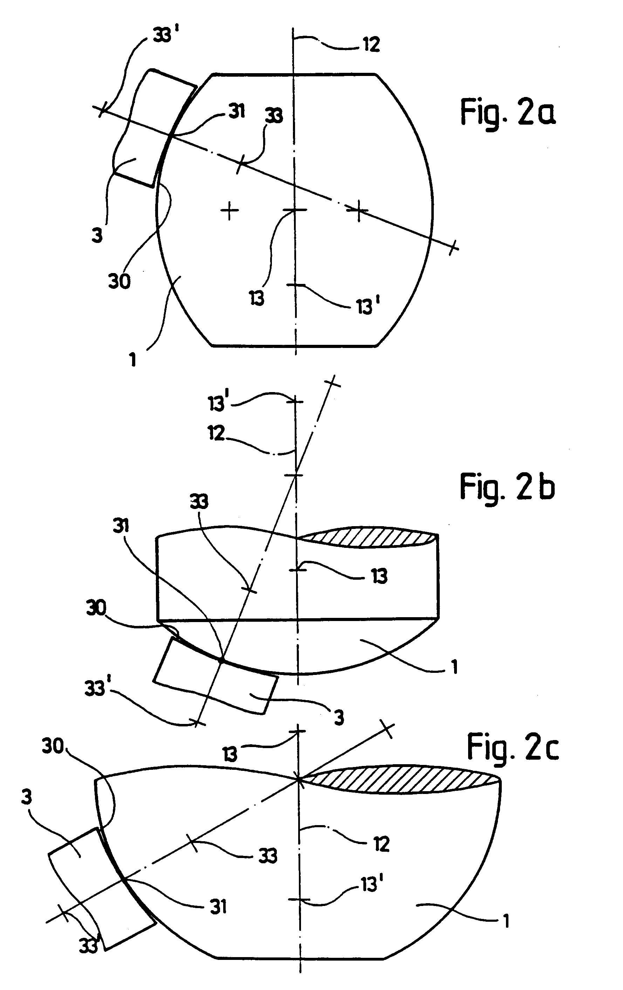

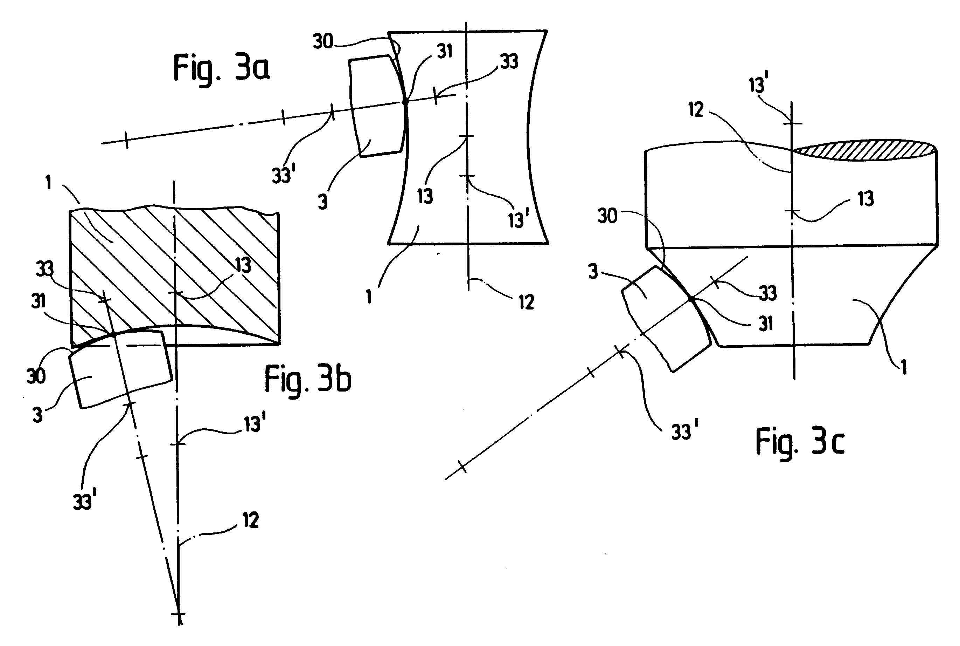

Die Prinzipdarstellungen nach den Fig. 1 bis 3 zeigen ein an einem Teil 10 seiner Oberfläche zu bearbeitendes Werkstück 1, das um eine Achse 12 eine drehende Abtragbewegung ausführt, sowie ein Werkzeug 3, das mit einer langgestreckten, beispielsweise als Schneide ausgebildeten Wirkzone 30 in einem Wirkpunkt 31 unter Ausführung einer Zustellbewegung auf die zu bearbeitende Werkstückoberfläche 10 punktweise einwirkt. Im Falle der Fig. 1a, 2a und 3a wird die Mantelfläche, im Falle der Fig. 1b, 2b und 3b die Stirnfläche und im Falle der Fig. 1c, 2c und 3c eine stirnseitige Schrägfläche einer Schälbearbeitung unterzogen. Für die Bearbeitung konvexer Werkstückoberflächen 10 wird ein Werkzeug 3 mit konkaver Wirkzone 30 ausgewählt, deren Krümmungsradius betragsmäßig größer als der größte Krümmungsradius der Werkstückoberfläche 10 in der betreffenden Schnittebene ist (Fig. 1 und 2). Umgekehrt wird im Falle der Bearbeitung konkaver Werkstückoberflächen ein Werkzeug mit konvexer Wirkzone 30 gewählt, deren Krümmungsradius kleiner als der kleinste Krümmungsradius der Werkstückoberfläche 10 in der betreffenden Schnittebene ist (Fig. 3). Die oben beschriebene Tangentenbedingung ist in den Figuren dadurch angedeutet, daß die Krümmungsmittelpunkte 14,32 der zu bearbeitenden Werkstückoberfläche 10 und der Wirkzone 30 des Werkstücks 3 auf einer gemeinsamen Geraden 20 angeordnet sind, die die Werkstückoberfläche 10 und die Wirkzone 30 im momentanen Bearbeitungspunkt 31 schneidet.

Im Falle der in den Fig. 1a,b und c gezeigten Ausführungsbeispiele findet zwischen dem Werkstück 1 und dem Werkzeug 3 eine ausschließlich translatorische Zustellbewegung statt. Um die Tangentenbedingung einhalten zu können, müssen dementsprechend in der Wirkzone 30 des Werkzeugs 3 sämtliche Steigungen der zu bearbeitenden Werkstückoberfläche enthalten sein, weshalb eine im Vergleich zur zu bearbeitenden Werkstückoberfläche relativ große Werkzeugabmessung erforderlich ist. Da der Wirkpunkt im Zuge der Schälbearbeitung entlang der Wirkzone 30 wandert, sind der Genauigkeit der Oberflächenbearbeitung durch die geometrische Genauigkeit der Wirkzone auf dem verwendeten Werkzeug Grenzen gesetzt.

Bei den in den Fig. 2 und 3 gezeigten Ausführungsbeispielen kommt der translatorischen Zustellbewegung in zwei Ebenen ein weiterer Rotationsfreiheitsgrad um eine beliebige Achse 33 bzw. 33' des Werkzeugs 3 oder z.B. 13 bzw. 13' des Werkstücks 1 hinzu. Dadurch kann die Tangentenbedingung im momentanen Bearbeitungspunkt auch dadurch erfüllt werden, daß immer der gleiche Wirkpunkt 31 entlang der Wirkzone 30 zur Anlage kommt, so daß der Einfluß der geometrischen Genauigkeit der Wirkzone 30 auf die Formgenauigkeit und Oberflächengüte der zu bearbeitenden Oberfläche 10 eliminiert wird. Weiter lassen sich mit dieser Maßnahme die Werkzeugabmessungen wesentlich reduzieren, wie aus den Fig. 2 und 3 im Vergleich zur Fig. 1 zu ersehen ist.

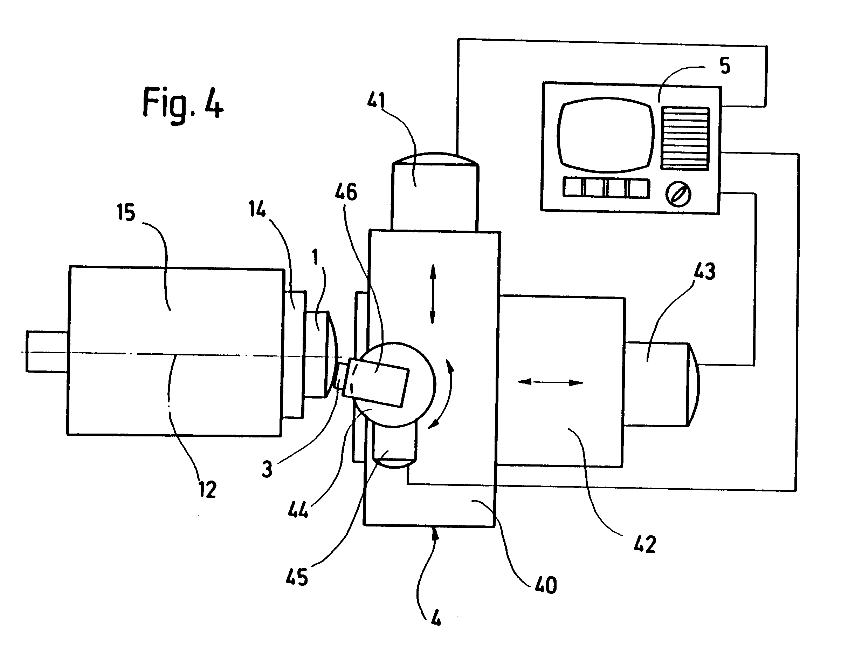

In Fig. 4 ist gezeigt, wie eine Drehmaschine für die Durchführung der oben im Rahmen der Fig. 2 und 3 beschriebenen Schälbearbeitung umgerüstet werden kann. Die Drehmaschine enthält einen das Werkstück 1 in einem Werkstückhalter 14 aufnehmenden Spindelstock 15, dessen Spindel um die Achse 12 eine drehende Abtragbewegung ausführt. Das Werkzeug 3 ist auf einem aus einem Querschlitten 40 und einem Längsschlitten 42 bestehenden Kreuzschlitten 4 angeordnet, der seinerseits mit einem als Rundtisch ausgebildetem Schwenkkopf 44 zur Aufnahme des das Werkzeug 3 aufnehmenden Werkzeughalters 46 bestückt ist. Der translatorische Antrieb des Querschlittens 40 und des Längsschlittens 42 sowie der rotatorische Antrieb des Schwenkkopfes 44 erfolgt über je einen geregelten Antrieb 41,43,45, die ihrerseits über eine gemeinsame CNC-Steuerung 5 unter Ausführung einer gekoppelten translatorischen und rotatorischen Zustellbewegung ansteuerbar sind.

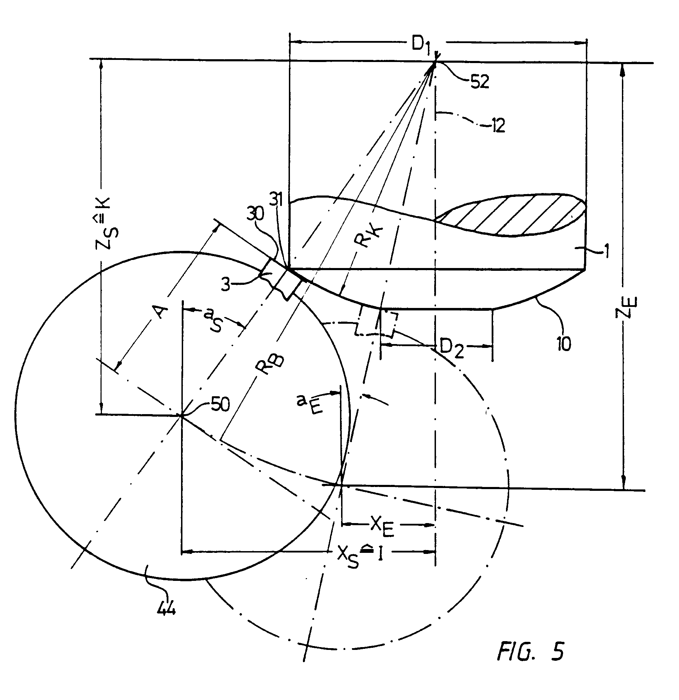

Bei dem Bearbeitungsbeispiel nach Fig. 5 wird an dem um die Spindelachse 12 rotierenden Werkstück 1 ein sich zwischen den Radiuswinkeln $a_S$ und $a_E$ gegenüber der Spindelachse 12 erstreckender Kugelabschnitt 10 mit Radius $R_K$ erzeugt. Das als Drehmeißel mit langgestreckter, vorzugsweise leicht konkav gekrümmter Schneide 30 ausgebildete Werkzeug 3 ist starr auf dem Rundtisch 44 eingespannt, und ist zusammen mit diesem in Richtung der X- und Z-Achsen mittels eines nicht dargestellten Kreuzschlittens in der ZX-Ebene (Zeichenebene) translatorisch und um die zur ZX-Ebene senkrechte Rundachse 50 des Rundtisches 44 rotatorisch zustellbar. Der Abstand A zwischen dem Schneidenwirkpunkt 31 und der Rundachse 50 kann mittels Mikroskop und Meßsystem der Maschine ermittelt werden. Als Werkstücknull-

EP 0 467 892 B1

punkt 52 wird zweckmäßig das Zentrum des Kugelabschnitts 10 angenommen. Die Start- und End-Koordinatenwerte der Rundachse $a_S$, $a_E$, $X_S$, $Z_S$, $X_E$ und $Z_E$ sind deshalb auf den Werkstücknullpunkt 52 bezogen. Unter der Voraussetzung, daß die Tangente durch den Wirkpunkt 31 der Schneide 30 in der ZX-Ebene senkrecht auf dem Radiusvektor des Rundtisches steht, ergeben sich für den Startwinkel $a_S$ und den Endwinkel $a_E$ des Rundtisches folgende Beziehungen:

$$a_S = \text{arc sin } \frac{\frac{1}{2} D_1}{R_K} \qquad (1a)$$

$$a_E = \text{arc sin} \frac{\frac{1}{2} D_2}{R_K} \qquad (2a)$$

wobei

$R_K$, $D_1$ und $D_2$ die aus Fig. 5 als bekannt vorausgesetzten Radius- und Durchmesserwerte des Kugelabschnitts 10 bezogen auf die Spindelachse 12 sind.

Unter Berücksichtigung der Tangentenbedingung im Wirkpunkt 31 ergeben sich weiter für die Start- und Endkoordinaten der Mittelpunktsbahn des Rundtisches 44 folgende Beziehungen:

$X_S = R_B \sin a_S$    (1b)

$Z_S = R_B \cos a_S$    (1c)

$X_E = R_B \sin a_E$    (2b)

$Z_E = R_B \cos a_E$    (2c)

wobei $R_B = A + R_K$ den Bahnradius der Mittelpunktsbahn bedeutet.

Für die Bearbeitung des Kugelabschnitts 10 gemäß Fig. 5 müssen in einem Programmsatz des CNC-Programms folgende Informationen stehen:
- eine Anweisung zur Kreisbogeninterpolation im Gegenuhrzeigersinn (Befehl G03)
- die Endkoordinaten $X_E$ und $Z_E$
- je nach Steuerungsmöglichkeit entweder der Radius $R_B$ oder die Interpolationsparameter I und K, die bei dem gezeigten Ausführungsbeispiel den Startkoordinaten $X_S$ und $Z_S$ entsprechen
- der Endwinkel $a_E$ der Rundachse.

Der Bewegungsablauf stellt sich als eine Überlagerung von zwei translatorischen Bewegungen entlang der Achsen X und Z in Kreisinterpolation und als rotatorische Bewegung um die Rundachse 50 (Winkel a) in Linearinterpolation dar.

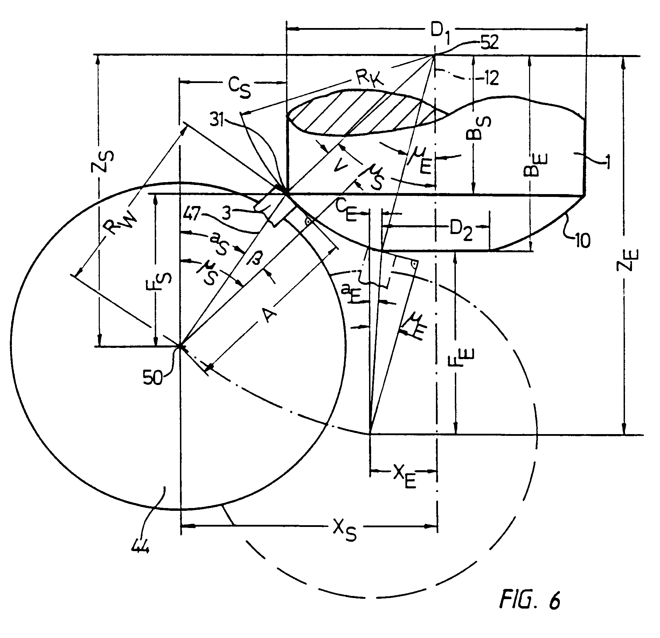

Das Bearbeitungsbeispiel nach Fig. 6 ist gegenüber dem in Fig. 5 gezeigten Bearbeitungsbeispiel insofern abgewandelt, als die Schneide 30 des Werkzeugs 3 mit ihrer Tangente im Bereich des Wirkpunkts 31 nicht senkrecht sondern um einen Anstellwinkel $\beta$ schräg zum Radiusvektor des Rundtisches 44 ausgerichtet ist. Für die Start- und Endkoordinaten des Rundtisch-Mittelpunkts ergeben sich hierbei unter Berücksichtigung der Tangentenbedingung im Wirkpunkt 31 des Werkzeugs 3 und unter Verwendung der in Fig. 6 angegebenen Parameter folgende Beziehungen:

$$a_S = \mu_S - \beta = \text{arcsin} \frac{\frac{1}{2} D_1}{R_K} - \text{arctan} \frac{V}{A} \qquad (3a)$$

$X_S = \frac{1}{2} D_1 + C_S = \frac{1}{2} D_1 + R_W \sin a_S$    (3b)

$Z_S = B_S + F_S = R_K \cos \mu_S + R_W \cos a_S$    (3c)

4

$$a_E = \mu_E - \beta = \arcsin\frac{\frac{1}{2}D_2}{R_K} - \arctan\frac{V}{A} \qquad (4a)$$

$$X_E = \tfrac{1}{2}D_2 + C_E = \tfrac{1}{2}D_2 + R_W \sin a_E \qquad (4b)$$

$$Z_E = B_E + F_E = R_K \cos \mu_E + R_W \cos a_E \qquad (4c)$$

wobei

$$R_W = \frac{A}{\cos \beta}$$

Der Abstand V des Wirkpunkts 31 vom Radiusvektor des Rundtisches wird mittels Mikroskop und Meßsystem der Maschine ermittelt.

Zwischen dem Startpunkt $X_S$, $Z_S$ und dem Endpunkt $X_E$, $Z_E$ durchfahren die X- und Z-Achsen eine Kreisinterpolation, der eine Linearinterpolation der Rundachse a zwischen $a_S$ und $a_E$ überlagert ist.

In der oben beschriebenen Weise können auch rotationssymmetrische Werkstücke mit mehreren aneinandergereihten Konturabschnitten erzeugt werden. Die Konturabschnitte können dabei sowohl kugelförmig als auch zylindrisch, kegelig oder eben ausgebildet werden und können entweder tangential oder nicht-tangential aneinander angrenzen.

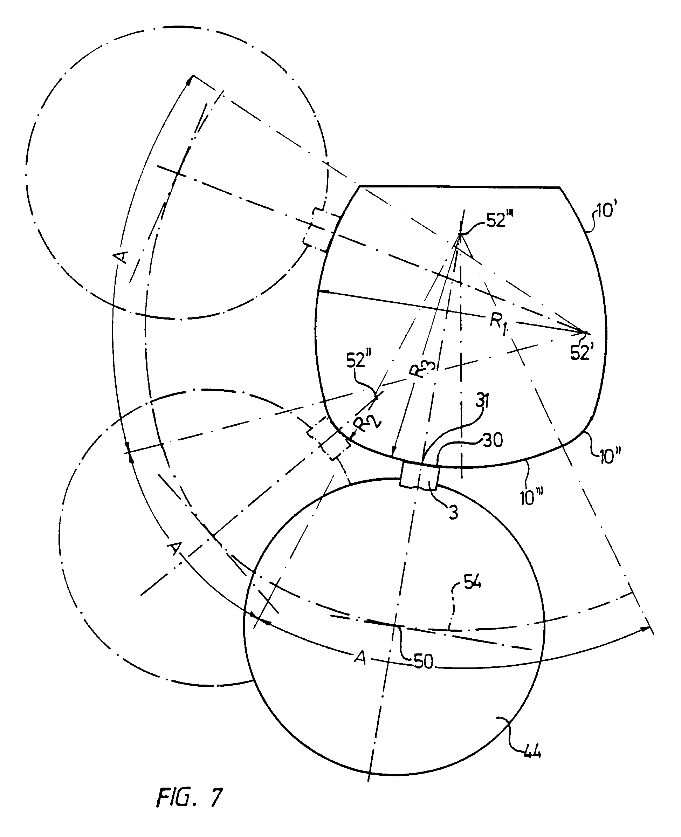

Bei dem in Fig. 7 gezeigten Bearbeitungsbeispiel weist das Werkstück 1 drei kugelförmige Konturabschnitte 10', 10'' und 10''' auf, die tangential ineinander übergehen. Dementsprechend ist der Bewegungsablauf des mit dem Werkzeug 3 bestückten Rundtisches in drei Bearbeitungsabschnitte A unterteilt, die aufgrund der unterschiedlichen Kugelmittelpunkte 52', 52'' und 52''' und der verschiedenen Kugelradien $R_1$, $R_2$ und $R_3$ durch drei verschiedene CNC-Sätze im Sinne der Ausführungsbeispiele nach Fig. 5 oder 6 gebildet werden. Der Rundtischmittelpunkt durchläuft dabei die strichpunktiert dargestellte Bahnkurve 54 in konstantem Abstand von der Kontur des Werkstücks 3.

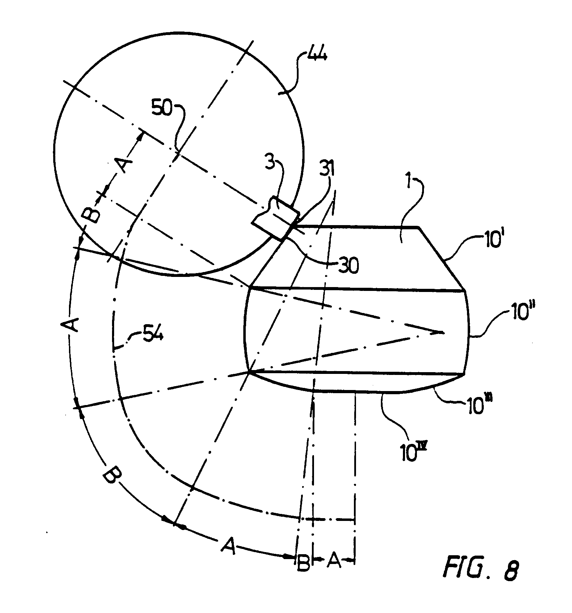

Bei dem Ausführungsbeispiel nach Fig. 8 weist das zu bearbeitende Werkstück 1 vier rotationssymmetrische Konturabschnitte 10', 10'' und 10''' und $10^{IV}$ auf, von denen der Abschnitt 10' kegelig, die Abschnitte 10'' und 10''' kugelförmig und der Abschnitt $10^{IV}$ eben ausgebildet sind. Der Übergang zwischen den Konturabschnitten ist nicht-tangential, so daß der Bewegungsablauf des Rundtisches 44 beim Bearbeitungsvorgang in vier Bearbeitungsabschnitte A und drei Korrekturabschnitte B unterteilt ist, die in der CNC-Programmierung durch voneinander getrennte Sätze wiedergegeben werden. Im kegelförmigen und im ebenen Bearbeitungsabschnitt 10' bzw. $10^{IV}$ wird der Rundtisch rein translatorisch bewegt, während in den Korrekturabschnitten B eine rein rotatorische Bewegung um die Rundachse erfolgt (zur Einstellung der neuen Tangentenbedingung). Zur Erzeugung der kugelförmigen Oberflächenbereiche 10'' und 10''' ist ein gekoppelter translatorischer und rotatorischer Bewegungsablauf in allen drei Achsen im Sinne der Ausführungsbeispiele nach Fig. 5 und 6 notwendig. Die in Fig. 8 strich-punktiert dargestellte Bahnkurve 54 des Rundtischmittelpunkts weist einen konstanten Abstand von der zu bearbeitenden Werkstückoberfläche auf.

## Patentansprüche

1.  Verfahren zur formgebenden Drehbearbeitung von Werkstücken , bei welchem das zu bearbeitende Werkstück und ein auf das Werkstück einwirkendes Werkzeug unter Abtrag von Werkstückmaterial in einer aus einer Abtragbewegung und einer Zustellbewegung resultierenden Wirkbewegung zur Erzeugung einer konvex gekrümmten Werkstückoberfläche relativ zueinander bewegt werden, wobei das Werkzeug eine gegen die zu bearbeitende Werkstückoberfläche einwirkende, langgestreckte Wirkzone aufweist, bei welchem das Werkzeug und das Werkstück so relativ zueinander geführt werden, daß die Wirkzone des Werkzeugs in allen Bearbeitungspositionen in wesentlichen punktweise oder in einen in Vergleich zu ihrer Längserstreckung kurzen Streckenabschnitt auf die Werkstückoberfläche einwirkt und die in wesentlichen quer zur Abtragbewegungsrichtung verlaufenden Tangenten durch die Wirkzone des Werkzeugs und die zu erzeugende Werkstückoberfläche in den momentanen Bearbeitungspositionen zusammenfallen (Tangentenbedingung), und bei welchem das Werkzeug und das Werkstück durch translatorische Zustellbewegungen relativ zueinander geführt werden und zu jeder Bearbeitungsposition ein zugehöriger Wirkpunkt entlang der Wirkzone nach Maßgabe der Tangentenbedingung gewählt wird, **dadurch gekennzeichnet,** daß die Wirkzone des Werkzeugs in ihrer Längserstreckung mit gegenüber dem größten Krümmungsradius der Werkstückoberfläche größeren Krümmungsradius konkav gekrümmt ist.

2. Verfahren zur formgebenden Drehbearbeitung von Werkstücken, bei welchem das zu bearbeitende Werkstück und ein auf das Werkstück einwirkendes Werkzeug unter Abtrag von Werkstückmaterial in einer aus einer Abtragbewegung und einer Zustellbewegung resultierenden Wirkbewegung zur Erzeugung einer gekrümmten Werkstückoberfläche relativ zueinander bewegt werden, wobei das Werkzeug eine gegen die zu bearbeitende Werkstückoberfläche einwirkende, langgestreckte Wirkzone aufweist, bei welchem das Werkzeug und das Werkstück so relativ zueinander geführt werden, daß die Wirkzone des Werkzeugs in allen Bearbeitungspositionen im wesentlichen punktweise oder mit einem im Vergleich mit ihrer Längserstreckung oder Flächenausdehnung kurzen Streckenabschnitt auf die Werkstückoberfläche einwirkt und die im wesentlichen quer zur Abtragbewegung verlaufenden Tangenten durch die Wirkzone des Werkzeugs und die zu erzeugende Werkstückoberfläche in den momentanen Bearbeitungspositionen zusammenfallen (Tangentenbedingung), und bei welchem das Werkzeug und das Werkstück durch translatorische und rotatorische Zustellbewegungen nach Maßgabe der Tangentenbedingung relativ zueinander geführt werden, **dadurch gekennzeichnet,** daß in allen Bearbeitungspositionen immer der gleiche Punkt entlang der Wirkzone als Wirkpunkt ausgewählt wird, daß die zu erzeugende Werkstückoberfläche konvex gekrümmt ist und daß die Wirkzone des Werkzeugs in ihrer Längserstreckung mit gegenüber dem größten Krümmungsradius der Werkstückoberfläche größerem Krümmungsradius konkav gekrümmt ist.

3. Verfahren zur formgebenden Drehbearbeitung von Werkstücken, bei welchem das zu bearbeitende Werkstück und ein auf das Werkstück einwirkendes Werkzeug unter Abtrag von Werkstückmaterial in einer aus einer Abtragbewegung und einer Zustellbewegung resultierenden Wirkbewegung zur Erzeugung einer gekrümmten Werkstückoberfläche relativ zueinander bewegt werden, wobei das Werkzeug eine gegen die zu bearbeitende Werkstückoberfläche einwirkende, langgestreckte Wirkzone aufweist, bei welchem das Werkzeug und das Werkstück so relativ zueinander geführt werden, daß die Wirkzone des Werkzeugs in allen Bearbeitungspositionen im wesentlichen punktweise oder mit einem im Vergleich mit ihrer Längserstreckung oder Flächenausdehnung kurzen Streckenabschnitt auf die Werkstückoberfläche einwirkt und die im wesentlichen quer zur Abtragbewegung verlaufenden Tangenten durch die Wirkzone des Werkzeugs und die zu erzeugende Werkstückoberfläche in den momentanen Bearbeitungspositionen zusammenfallen (Tangentenbedingung), und bei welchem das Werkzeug und das Werkstück durch translatorische und rotatorische Zustellbewegungen nach Maßgabe der Tangentenbedingung relativ zueinander geführt werden, **dadurch gekennzeichnet,** daß in allen Bearbeitungspositionen immer der gleiche Punkt entlang der Wirkzone als Wirkpunkt ausgewählt wird, daß die zu erzeugende Werkstückoberfläche konkav gekrümmt ist und daß die Wirkzone des Werkzeugs in ihrer Längserstreckung mit gegenüber dem kleinsten Krümmungsradius der Werkstückoberfläche geringfügig kleinerem Krümmungsradius konvex gekrümmt ist.

4. Verfahren nach Anspruch 2 oder 3, **dadurch gekennzeichnet,** daß bei verschiedenen Bearbeitungsvorgängen abwechselnd verschiedene Punkte entlang der Wirkzone des Werkzeugs als Wirkpunkte ausgewählt werden.

5. Verfahren nach einem der Ansprüche 1 bis 4, **dadurch gekennzeichnet,** daß die Bewegungsachsen der Zustellbewegungen durch eine CNC-Steuerung nach Maßgabe der Tangentenbedingung angesteuert werden.

## Claims

1. Process for machining workpieces to shape, wherein the workpiece to be machined and a tool acting on the workpiece are moved relative to one another in order to produce a convexedly curved workpiece surface whilst removing workpiece materal in a movement resulting from a removal movement and a positioning movement, wherein the tool comprises an extended machining zone which acts on the surface of the workpiece to be machined, wherein the tool and the workpiece are moved relative to one another in such a manner that the machining zone in all machining positions acts on the workpiece surface substantially at a point or a short segment, by comparison to its longitudinal extent, and that the tangents through the machine zone of the tool , which run substantially transversely to the removal direction, and the workpiece surface to be machined coincide in the instantaneous machining positions (tangent pre-requisite), and wherein the tool and the workpiece are moved relative to one another by translatory positioning movements and for each machining position is selected an associated point of action along the action zone according to the tangent pre-requisite, **characterised in that** the machining zone of the tool in its longitudinal extension is concavely curved and has a greater radius of curvature than the greatest radius of curvature of the workpiece surface.

2. Process for machining workpieces to shape, wherein the workpiece to be machined and a tool acting on the workpiece are moved relative to one another in order to produce a convexedly curved workpiece surface whilst removing workpiece material in a movement resulting from a removal movement and a positioning movement, wherein the tool comprises an extended machining zone which acts on the surface of the workpiece to be machined, wherein the tool and the workpiece are moved relative to one another in such a manner that the machining zone in all machining positions acts on the workpiece surface substantially at a point or a short segment, by comparison to its longitudinal extent, and that the tangents through the machine zone of the tool, which run substantially transversely to the removal direction, and the workpiece surface to be machined coincide in the instantaneous machining positions (tangent pre-requisite), and wherein the tool and the workpiece are moved relative to one another by translatory and rotational positioning movements according to the tangent pre-requisite, **characterised in that** in all machining positions always the same point along the machining zone is selected as point of action, and that the workpiece surface to be machined is convexedly curved, and that the machining zone of the tool in its longitudinal extent is concavely curved and has a greater radius of curvature than the greatest radius of curvature of the workpiece surface.

3. Process for machining workpieces to shape, wherein the workpiece to be machined and a tool acting on the workpiece are moved relative to one another in order to produce a convexedly curved workpiece surface whilst removing workpiece material in a movement resulting from a removal movement and a positioning movement, wherein the tool comprises an extended machining zone which acts on the surface of the workpiece to be machined, wherein the tool and the workpiece are moved relative to one another in such a manner that the machining zone in all machining positions acts on the workpiece surface substantially at a point or a short segment, by comparison to its longitudinal extent, and that the tangents through the machine zone of the tool , which run substantially transversely to the removal direction, and the workpiece surface to be machined coincide in the instantaneous machining positions (tangent pre-requisite), and wherein the tool and the workpiece are moved relative to one another by translatory and rotational positioning movements according to the tangent pre-requisite, **characterised in that** in all machining positions always the same action point is selected, that the workpiece surface to be machined is concavely curved, and that the action zone of the tool is convexedly curved in its longitudinal extent and has a slightly smaller curvature radius than the smallest curvature radius of the workpiece surface.

4. Process according to claim 2 or 3, **characterised in that** in different machining processes different points along the action zone of the tool can be alternately selected as action points.

5. Process according to one of claims 1 to 4, **characterised in that** movement axes of the positioning movements are controlled by a CNC control according to the tangent pre-requisites.

**Revendications**

1. Procédé d'usinage de pièces par tournage dans lequel la pièce à usiner et un outil agissant sur celle-ci sont mus l'un par rapport à l'autre avec enlèvement de matière de la pièce dans un mouvement actif résultant d'un mouvement d'enlèvement de matière et d'un mouvement d'amenage pour la production d'une surface de pièce convexe, l'outil présentant une zone active allongée agissant contre la surface de pièce à usiner, dans lequel l'outil et la pièce sont conduits l'un par rapport à l'autre de façon que la zone active de l'outil, dans toutes les positions d'usinage, agisse sensiblement ponctuellement, ou sur un tronçon court comparativement à son étendue longitudinale, sur la surface de la pièce et que les tangentes, sensiblement perpendiculaires à la direction du mouvement d'enlèvement de matière, à la zone active de l'outil et à la surface de pièce à produire coïncident dans les positions instantanées d'usinage (condition des tangentes), et dans lequel l'outil et la pièce sont conduits l'un par rapport à l'autre par des mouvements d'amenage de translation et à chaque position d'usinage, un point d'action correspondant est choisi le long de la zone active conformément à la condition des tangentes, caractérisé par le fait que la zone active de l'outil, sur son étendue longitudinale, est concave et a un rayon de courbure plus grand que le plus grand rayon de courbure de la surface de la pièce.

2. Procédé d'usinage de pièces par tournage dans lequel la pièce à usiner et un outil agissant sur celle-ci sont nus l'un par rapport à l'autre avec enlèvement de matière de la pièce dans un mouvement actif résultant d'un mouvement d'enlèvement de matière et d'un mouvement d'amenage pour la production d'une surface de pièce courbe, l'outil présentant une zone active allongée agissant contre la surface de pièce à usiner, dans lequel l'outil et la pièce sont conduits l'un par rapport à l'autre de façon que la zone active de l'outil, dans toutes les positions d'usinage, agisse sensiblement ponctuellement, ou par un tronçon court comparativement à son étendue longitudinale ou à sa superficie, sur la surface de la pièce et que les tangentes, sensiblement perpendiculaires au mouvement d'enlèvement de matière, à la zone active de l'outil et à la surface de pièce à produire coïncident dans les positions instantanées d'usinage (condition des tangentes), et dans lequel l'outil et la pièce sont conduits l'un par rapport à l'autre par des mouvements d'amenage de translation et de rotation conformément à la condition des tangentes, caractérisé par le fait dans toutes les positions d'usinage est toujours choisi comme point d'action le même point le long de la zone active, que la surface de pièce à produire est convexe et que la zone active de l'outil, sur son étendue longitudinale, est concave et a un rayon de courbure plus grand que le plus grand rayon de courbure de la surface de la pièce.

3. Procédé d'usinage de pièces par tournage dans lequel la pièce à usiner et un outil agissant sur celle-ci sont mus l'un par rapport à l'autre avec enlèvement de matière de la pièce dans un mouvement actif résultant d'un mouvement d'enlèvement de matière et d'un mouvement d'amenage pour la production d'une surface de pièce courbe, l'outil présentant une zone active allongée agissant contre la surface de pièce à usiner, dans lequel l'outil et la pièce sont conduits l'un par rapport à l'autre de façon que la zone active de l'outil, dans toutes les positions d'usinage, agisse sensiblement ponctuellement, ou par un tronçon court comparativement à son étendue longitudinale ou à sa superficie, sur la surface de la pièce et que les tangentes, sensiblement perpendiculaires au mouvement d'enlèvement de matière, à la zone active de l'outil et à la surface de pièce à produire, coïncident dans les positions instantanées d'usinage (condition des tangentes), et dans lequel l'outil et la pièce sont conduits l'un par rapport à l'autre par des mouvements d'amenage de translation et de rotation conformément à la condition des tangentes, caractérisé par le fait que dans toutes les positions d'usinage est toujours choisi comme point d'action le même point le long de la zone active, que la surface de pièce à produire est concave et que la zone active de l'outil, sur son étendue longitudinale, est convexe et a un rayon de courbure légèrement plus petit que le plus petit rayon de courbure de la surface de la pièce.

4. Procédé selon l'une des revendications 2 et 3, caractérisé par le fait que lors de différentes opérations d'usinage, comme points d'action sont choisis alternativement différents points le long de la zone active de l'outil.

5. Procédé selon l'une des revendications 1 à 4, caractérisé par le fait que les axes des mouvements d'amenage sont commandés par une CNC conformément à la condition des tangentes.

8

Fig. 1a

Fig. 1b

Fig. 1c

Fig. 2a

Fig. 2b

Fig. 2c

Fig. 3a

Fig. 3b

Fig. 3c

# Fig. 4

EP 0 467 892 B1

FIG. 5

FIG. 6

FIG. 7

FIG. 8